# EUROPÄISCHE PATENTANMELDUNG

(11) **EP 2 025 440 A2**
(43) Veröffentlichungstag der Anmeldung: **18.02.2009**
(21) Anmeldenummer: 08010305.4
(22) Anmeldetag: 06.06.2008
(51) Int. Cl.: B23D 49/11, B23D 51/16

(54) **Vorsatzgerät für eine Hubsäge**

(30) Priorität: 17.08.2007 DE 102007038979
(71) Anmelder: Festool GmbH, 73240 Wendlingen (DE)
(72) Erfinder: Höfer, Tobias, 73547 Lorch (DE); Reuß, Torsten, 73265 Dettingen/Teck (DE)
(74) Vertreter: Bregenzer, Michael

(57) **Zusammenfassung**

Einer Hubsäge (2) mit einem eine hin und hergehende Hubbewegung ausführenden Sägeblatthalter (3) zum lösbaren Befestigen eines Sägeblattes ist ein Vorsatzgerät (1) zugeordnet, das an der Hubsäge (2) befestigbar ist. Das Vorsatzgerät (1) enthält ein mit dem Sägeblatthalter (3) anstelle des Sägeblattes verbindbares Antriebsteil (15), eine beim Betrieb eine hin und her gehende, mit Bezug auf die Hubbewegung des Sägeblatthalters (3) parallel versetzte Arbeitsbewegung (18) ausführende Halteeinrichtung (16) für ein Werkstück-Bearbeitungswerkzeug (17) sowie eine die Hubbewegung (5) des Antriebsteils (15) in die Arbeitsbewegung (18) der Halteeinrichtung (16) umsetzende Bewegungs-Umsetzeinrichtung.

## Beschreibung

Die Erfindung betrifft ein Vorsatzgerät für eine Hubsäge, insbesondere Stichsäge, die einen beim Betrieb eine hin und her gehende Hubbewegung ausführenden Sägeblatthalter zum lösbaren Befestigen eines Sägeblattes aufweist.

Stichsägen und andere Hubsägen, beispielsweise Säbelsägen, sind seit vielen Jahren in großer Vielfalt bekannt, so beispielsweise aus der DE 34 20 442 A1.

Bei derartigen Stichsägen, die üblicherweise einen auf das zu sägende Werkstück aufzulegenden Sägetisch aufweisen, ragt das Sägeblatt vom Sägeblatthalter nach unten durch eine Ausnehmung des Sägetisches hindurch, so dass es an einem Werkstück, auf das man die Stichsäge aufgesetzt hat, einen Sägeschnitt ausführt. Hierzu verschiebt man die Stichsäge auf dem Werkstück in Vorschubrichtung.

Der vorliegenden Erfindung liegt die Aufgabe zugrunde, den Anwendungsbereich von Hubsägen zu erweitern.

Diese Aufgabe wird durch die Merkmale des Anspruchs 1 gelöst. Demgemäß ist ein Vorsatzgerät für eine Hubsäge der genannten Art vorgesehen, das an der Hubsäge befestigbar ist und ein mit dem Sägeblatthalter an Stelle eines Sägeblattes verbindbares Antriebsteil, eine beim Betrieb eine hin und her gehende, mit Bezug auf die Hubbewegung des Sägeblatthalters parallel versetzte und/oder winkelig zur Hubbewegung gerichtete Arbeitsbewegung ausführende Halteeinrichtung für ein Werkstück-Bearbeitungswerkzeug und eine die Hubbewegung des Antriebsteils in die Arbeitsbewegung der Halteeinrichtung umsetzende Bewegungs-Umsetzeinrichtung enthält.

Mit einem im Einzelnen entsprechend konzipierten Vorsatzgerät kann man beispielsweise folgender Anwendungsbeschränkung üblicher Hubsägen begegnen.

Bei einer üblichen Stichsäge steht der Sägetisch nach allen Seiten hin vor das Sägeblatt vor und sollte möglichst ganzflächig auf dem Werkstück aufliegen. Daher kann man mit dem Sägeblatt nur in ausreichender Entfernung vom Werkstückrand oder einem Inneneck des Werkstücks einen Sägeschnitt anbringen.

Gemäß vorliegender Erfindung kann die Hubsäge dagegen nicht nur ihrer eigentlichen Bestimmung entsprechend als Hubsäge sondern auch sozusagen als motorischer Antrieb für ein oder mehrere verschiedene Zusatzgeräte verwendet werden, das bzw. die man an spezielle Anwendungsbereiche anpassen kann. So ist es beispielsweise möglich, ein Zusatzgerät mit einer so positionierten und entsprechend ausgebildeten Halteeinrichtung für ein Sägeblatt bereitzustellen, mit dem man auch am Werkstückrand oder in Inneneckbereichen sägen kann.

Ferner ist ein Zusatzgerät möglich, mit dem man bei entsprechender Ausbildung der Bewegungs-Umsetzeinrichtung eine mit Bezug auf die Hubbewegung des Sägeblatthalters anders gerichtete Arbeitsbewegung erhält.

Des Weiteren muss es sich bei dem am Vorsatzgerät befestigbaren Werkstück-Bearbeitungswerkzeug nicht um ein Sägeblatt handeln. Das Vorsatzgerät kann auch zum Halten von anderen beliebigen Bearbeitungswerkzeugen ausgebildet sein, die eine hin und her gehende Arbeitsbewegung ausführen sollen.

Ein weiterer Vorteil besteht darin, dass man in die Bewegungs-Umsetzeinrichtung eine Hubübersetzung integrieren kann.

Zweckmäßige Ausgestaltungen der Erfindung sind in den Unteransprüchen angegeben.

Nachstehend werden Ausführungsbeispiele der Erfindung anhand der Zeichnung beschrieben. Es zeigen:
- Figur 1: eine Stichsäge mit einem an ihr befestigten Vorsatzgerät gemäß vorliegender Erfindung in schematischer Seitenansicht, wobei am Vorsatzgerät ein mit Bezug auf ein unmittelbar an der Stichsäge befestigtes Sägeblatt weiter vorne und seitlich angeordnetes Sägeblatt befestigt ist und wobei sich der Sägeblatthalter der Stichsäge und die Halteeinrichtung des Vorsatzgerätes in einer Mittelstellung - wie auch in den Figuren 2 und 3 - zwischen den beiden aus den Figuren 5 und 6 hervorgehenden Stellungen befinden,
- Figur 2: das Vorsatzgerät nach Figur 1 ohne die Stichsäge in vergrößerter Schrägansicht, wobei das Gehäuse des Vorsatzgerätes entfernt ist, so dass insbesondere die Bewegungs-Umsetzeinrichtung sichtbar ist,
- Figur 3: die Anordnung nach Figur 1, wobei das Gehäuse des Vorsatzgerätes wie in Figur 2 entfernt ist,
- Figur 4: die Anordnung nach Figur 3 in Draufsicht gemäß Pfeil IV in Figur 3,
- Figur 5: die Anordnung nach Figur 3, wobei sich der Sägeblatthalter der Stichsäge im unteren Umkehrpunkt seiner Hubbewegung und die Halteeinrichtung des Vorsatzgerätes im oberen Umkehrpunkt ihrer Arbeitsbewegung befindet,
- Figur 6: die Anordnung nach Figur 3, wobei sich der Sägeblatthalter der Stichsäge im oberen Umkehrpunkt seiner Hubbewegung und die Halteeinrichtung des Vorsatzgerätes im unteren Umkehrpunkt ihrer Arbeitsbewegung befindet,
- Figuren 7 und 8: zwei Varianten des Antriebsteils des Vorsatzgerätes im zur Seitenansicht parallelen, der Schnittlinie A-A in Figur 4 entsprechenden Schnitt,
- Figuren 9 und 10: die beiden einander entgegengesetzten Seitenansichten des in den Figuren 1 bis 6 am Vorsatzgerät befestigten Sägeblattes,
- Figur 11: ein anderes Ausführungsbeispiel des erfindungsgemäßen Vorsatzgerätes (das Gehäuse wurde weggelassen), bei dem die Halteeinrichtung wie beim Ausführungsbeispiel nach den Figuren 1 bis 6 eine zur Hubbewegung des Antriebsteils parallele Arbeitsbewegung ausführt, in Schrägansicht,
- Figur 12: die Bewegungs-Umsetzeinrichtung mit zugehörigem Antriebsteil und Halteeinrichtung eines weiteren Ausführungsbeispiels des erfindungsgemäßen Vorsatzgerätes, bei dem die Halteeinrichtung wie beim Ausführungsbeispiel nach den Figuren 1 bis 6 eine zur Hubbewegung des Antriebsteils parallele Arbeitsbewegung ausführt, in Schrägansicht, wobei zusätzlich noch eine Seitenverstelleinrichtung für die Halteeinrichtung integriert ist,
- Figur 13: das die Bewegungs-Umsetzeinrichtung der Figur 12 enthaltende weitere Ausführungsbeispiel des erfindungsgemäßen Vorsatzgerätes (das Gehäuse des Vorsatzgerätes wurde weggelassen) in entgegengesetzter Schrägansicht,
- Figur 14: die Anordnung nach Figur 13 in explodierter Darstellungsweise,
- Figur 15: das Vorsatzgerät nach den Figuren 12 bis 14, wobei die Halteeinrichtung mittels der Seitenverstelleinrichtung zu einer Seite hin verlagert worden ist,
- Figur 16: die Anordnung nach Figur 15, wobei sich das Sägeblatt im unteren Umkehrpunkt seiner Arbeitsbewegung befindet (in den Figuren 12 bis 15 befindet sich das Sägeblatt in halber Höhe seines Arbeitshubs),
- Figur 17: die Anordnung nach den Figuren 15 und 16 in Draufsicht und
- Figur 18: ein anderes Vorsatzgerät, bei dem die Halteeinrichtung eine zur Hubbewegung des Sägeblatthalters rechtwinkelige Arbeitsbewegung ausführt, in der Figur 3 entsprechender Darstellungsweise.

Aus der Zeichnung gehen mehrere Ausführungsbeispiele eines Vorsatzgerätes 1; 1a; 1b; 1c für eine Hubsäge, im dargestellten Falle eine beim Betrieb vom Benutzer von Hand gehaltene Stichsäge 2, hervor.

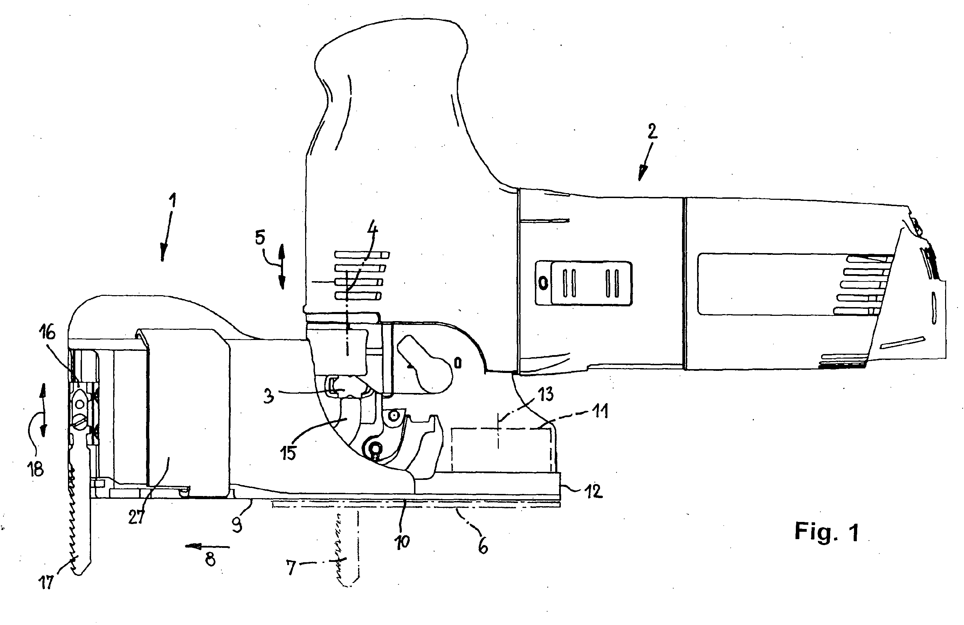

Die Stichsäge 2 weist einen üblichen Aufbau auf und enthält einen Sägeblatthalter 3, der am unteren Ende einer durch ihre Achslinie angedeutete Hubstange 4 angeordnet ist, die beim Betrieb motorisch zu einer hin und her gehenden Hubbewegung gemäß Doppelpfeil 5; 5a; 5b; 5c angetrieben wird. Die Stichsäge 2 weist ferner einen in Figur 1 strichpunktiert angedeuteten Sägetisch 6 auf, mit dem die Stichsäge 2 auf ein zu sägendes Werkstück aufgesetzt wird. Am Sägeblatthalter 3 wird ein ebenfalls nur strichpunktiert angedeutetes Sägeblatt 7 eingespannt, das im befestigten Zustand in Verlängerung der Hubstange 4 parallel zu dieser nach unten verläuft und eine Ausnehmung im Sägetisch 6 durchgreift, so dass es nach unten hin vorsteht und beim Verschieben der Stichsäge 2 auf dem Werkstück in Vorschubrichtung 8 an diesem einen Sägeschnitt anbringt.

Das Vorsatzgerät 1; 1a; 1b; 1c; wird bei Bedarf an der Stichsäge 2 angebracht. Dies kann bei an der Hubsäge verbleibendem Sägetisch oder, wie bei den nachstehend beschriebenen Ausführungsbeispielen, nach vorheriger Wegnahme des lösbar befestigten Sägetisches 6 erfolgen. Das Vorsatzgerät 1; 1a; 1b; 1c weist ein an Stelle des Sägetisches 6 an der Stichsäge 2 zu befestigendes Tragteil 9; 9a; 9b; 9c auf, das eine am zu bearbeitenden Werkstück aufzulegende Tischplatte 10; 10a; 10b; 10c bildet. Die beim Befestigen des Vorsatzgerätes 1; 1a; 1b; 1c an die Stelle des Sägetisches 6 tretende Tischplatte 10; 10a; 10b; 10c kann sich in gleicher Höhe wie der Sägetisch 6 befinden. In Figur 1 wurden der Sägetisch 6 und die Tischplatte 10 aus Darstellungsgründen übereinander gezeichnet.

Die lösbare Befestigung der Tischplatte 10; 10a; 10b; 10c und somit des ganzen Vorsatzgerätes 1; 1a; 1b; 1c an der Stichsäge 2 erfolgt in gleicher Weise wie die übliche Befestigung des Sägetisches 6, die beispielsweise aus der DE 34 20 442 A1 hervorgeht. Dementsprechend ist am Tragteil 9; 9a; 9b; 9c bzw. an dessen Tischplatte ein hohlprofilartiger Aufsatz 11; 11a; 11b; 11c angeordnet, der einstückig angeformt sein kann. Er erstreckt sich in Längsrichtung der Tischplatte 10; 10a; 10b; 10c und ist nach oben gewölbt. Dabei ist er als Mantelabschnitt eines Kreiszylinders konturiert, wobei die Winkelerstreckung im dargestellten Falle etwa 180° beträgt, so dass der Aufsatz 11; 11a; 11b; 11c im Wesentlichen die Gestalt eines halbierten Kreiszylinders aufweist.

Die Stichsäge 2 ist an ihrer Unterseite komplementär zum Aufsatz 11 konkav eingewölbt, so dass der betreffende Bereich 12 der Stichsäge 2 ebenfalls den Abschnitt einer Zylindermantelfläche bildet, dessen Winkelerstreckung jedoch kleiner als die des Aufsatzes 11 sein kann. Im montierten Zustand sitzt die Stichsäge 2 mit ihrer konkav eingewölbten Zylindermantelfläche auf dem Aufsatz 11; 11a; 11b; 11c. Da die Winkelerstreckung der Zylindermantelfläche der Stichsäge kleiner als die Winkelerstreckung des Aufsatzes 11; 11a; 11b; 11c der Tischplatte 10; 10a; 10b; 10c des Vorsatzgerätes ist, kann die Stichsäge auf der Tischplatte, falls dies erwünscht sein sollte, verschwenkt werden. Das Feststellen der Tischplatte 10; 10a; 10b; 10c und somit des Tragteils 9; 9a; 9b; 9c des Vorsatzgerätes erfolgt mittels einer Befestigungsschraube 13 von unten her, die durch ein Langloch 14; 14a; 14b im Aufsatz 11; 11a; 11b; 11c gesteckt und in das Gehäuse der Stichsäge eingeschraubt wird.

Die Anordnung kann jedoch, wie bereits erwähnt, auch so getroffen sein, dass das Vorsatzgerät bei an der Hubsäge verbleibendem Sägetisch befestigt wird. Eine auf diese Weise erfolgende Befestigung kann von einem Fachmann ohne weiteres verwirklicht werden.

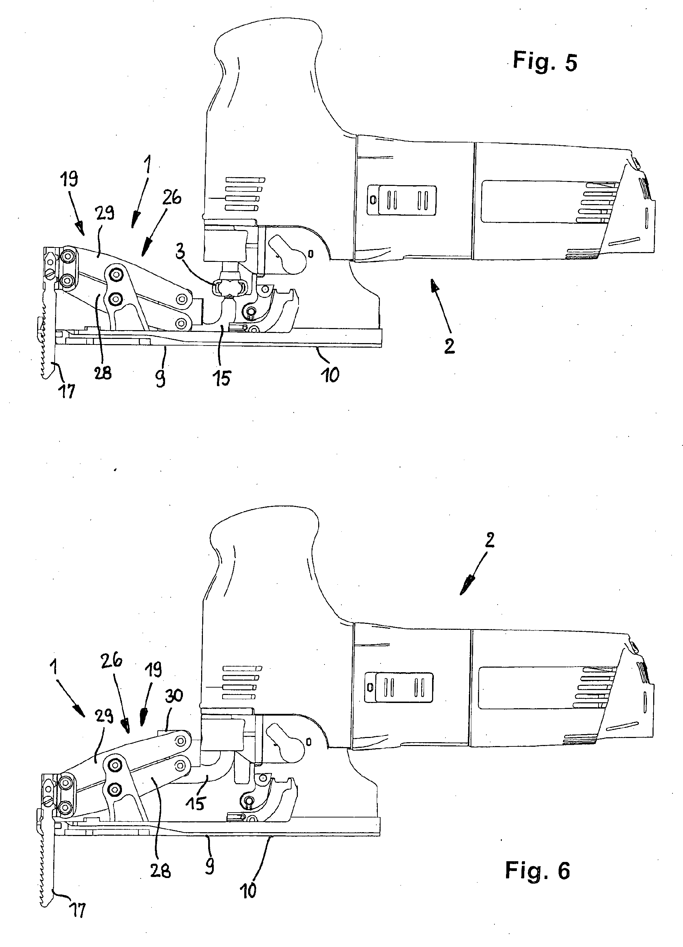

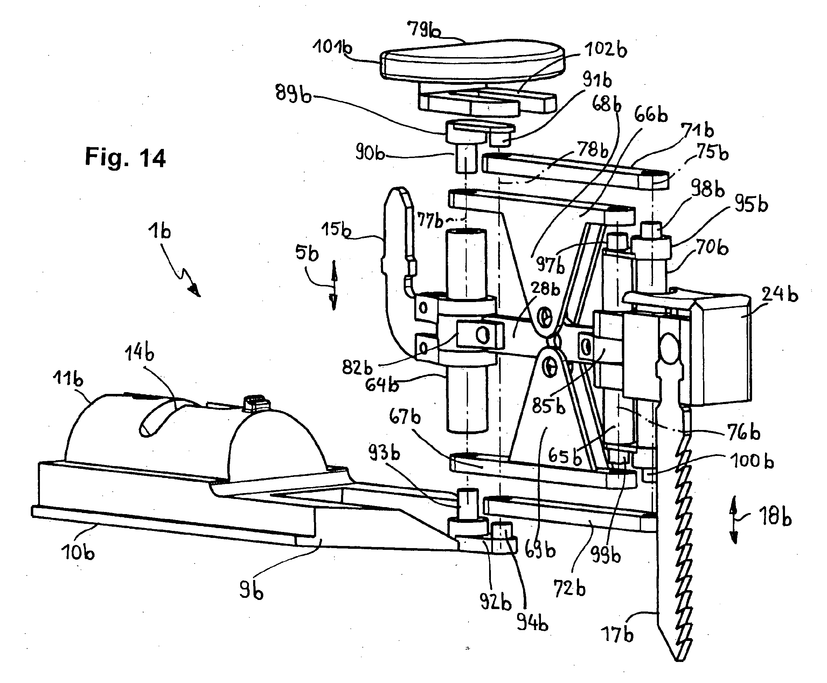

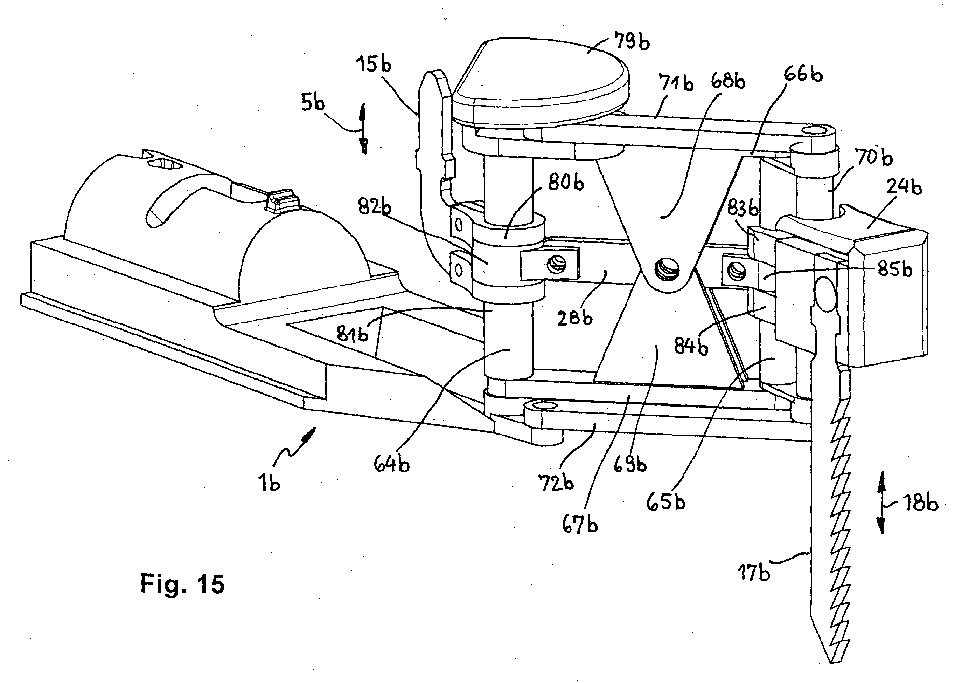

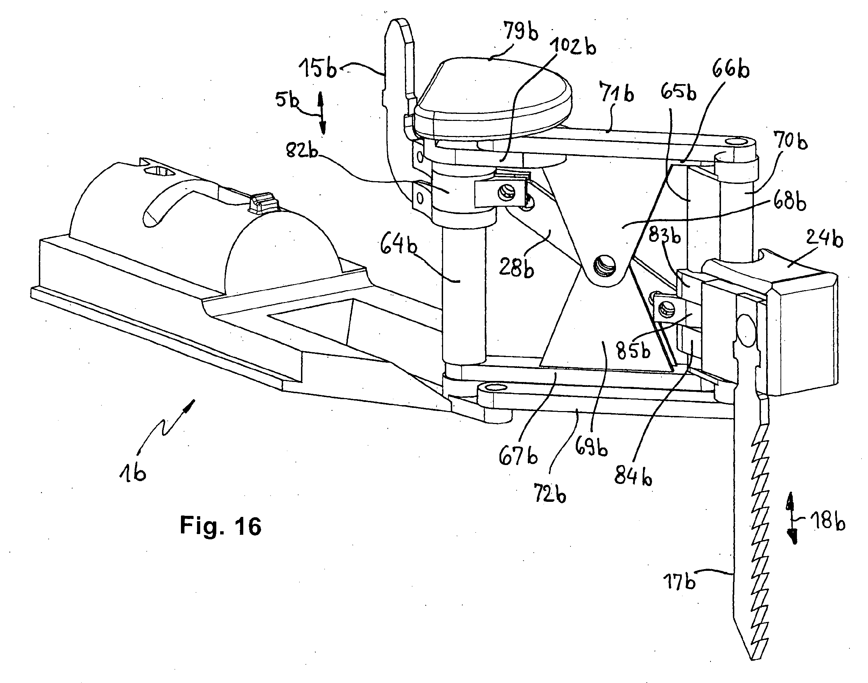

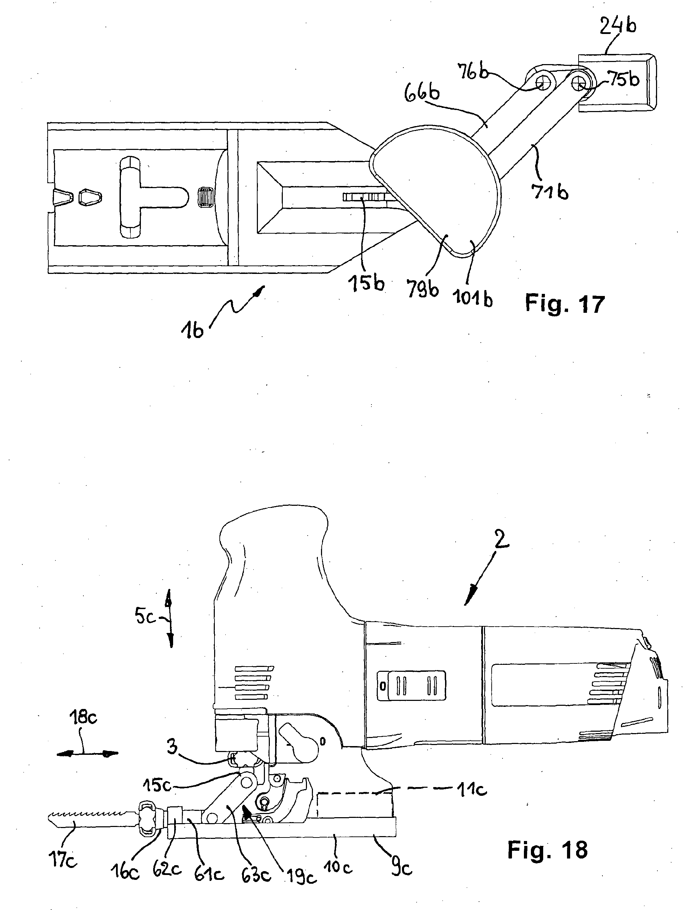

Das Vorsatzgerät 1; 1a; 1b; 1c enthält ein mit dem Sägeblatthalter 3 anstelle des Sägeblattes 7 verbindbares Antriebsteil 15, 15'; 15a; 15b; 15c, eine beim Betrieb hin und her gehende, mit Bezug auf die Hubbewegung 5; 5a; 5b; 5c des Sägeblatthalters 3 parallel versetzte (Figuren 1 bis 6, 11 bis 17) oder winkelig (Figur 18) zur Hubbewegung 5; 5a; 5b; 5c gerichtete Arbeitsbewegung 18; 18a; 18b; 18c ausführende Halteeinrichtung 16; 16a; 16b; 16c für ein Werkstück-Bearbeitungswerkzeug 17; 17a; 17b; 17c, bei den Ausführungsbeispielen jeweils ein Sägeblatt, und eine die Hubbewegung des Antriebsteils 15, 15'; 15a; 15b; 15c in die Arbeitsbewegung 18; 18a; 18b; 18c der Halteeinrichtung 16; 16a; 16b; 16c umsetzende Bewegungs-Umsetzeinrichtung 19; 19a; 19b; 19c.

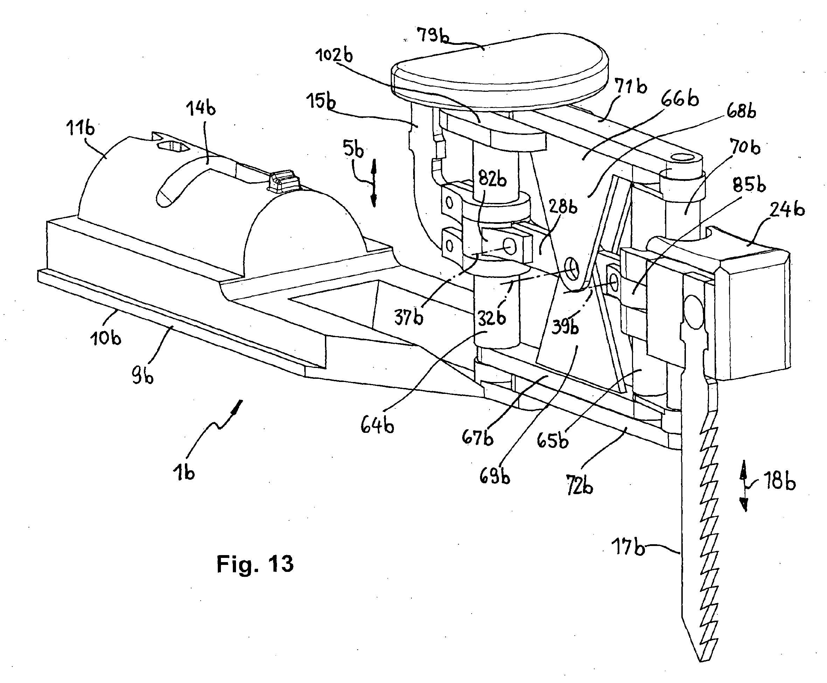

Der dem Sägeblatthalter 3 zugewandte Bereich 20; 20a; 20b (in Figur 13 ist dieser Bereich nicht sichtbar) des Antriebsteils 15, 15'; 15a; 15b; 15c ist gleich wie der Endbereich des Sägeblattes 7 ausgebildet, so dass sich das Antriebsteil in gleicher Weise wie das Sägeblatt 7 am Sägeblatthalter 3 der Stichsäge 2 befestigen lässt.

Im Falle der Verwendung eines Vorsatzgerätes 1; 1a; 1b; 1c dient die Stichsäge 2 über den Sägeblatthalter 3 als motorisches Antriebsgerät für das Vorsatzgerät, innerhalb von dem die Hubbewegung 5; 5a; 5b; 5c des Sägeblatthalters 3 in die Arbeitsbewegung 18; 18a; 18b; 18c der Halteeinrichtung 16; 16a; 16b; 16c und somit in die Arbeitsbewegung des jeweiligen Werkstück-Bearbeitungswerkzeugs 17; 17a; 17b; 17c umgesetzt wird. Das Bearbeitungswerkzeug kann auch ein anderes Werkzeug als ein Sägeblatt sein. Es versteht sich, dass die Halteeinrichtung an das jeweilige Werkzeug angepasst werden muss.

Die Halteeinrichtung 16; 16a; 16b; 16c hat zumindest bei den eine zur Hubbewegung parallele Arbeitsbewegung ausführenden Ausführungsbeispielen aus einem noch zu beschreibenden Grund zwei an einander entgegengesetzten Seiten des Vorsatzgerätes angeordnete Befestigungsstellen 21, 21'; 21a, 21a'; 21b, 21b' zum Befestigen des jeweiligen Bearbeitungswerkzeugs 17; 17a; 17b. Damit das Bearbeitungswerkzeug jeweils das seitlich äußerste Teil des Vorsatzgerätes bildet, erfolgt die Befestigung an der Halteeinrichtung mittels einer Senkkopfschraube 22 (nur in den Figuren 1 bis 6 eingezeichnet), der an den beiden einander entgegengesetzten Seiten des Bearbeitungswerkzeugs jeweils eine kegelige Schraubenkopfaufnahme 23, 23' zugeordnet ist, in die der entsprechend kegelige Kopf der Senkkopfschraube 22 in üblicher Weise eintaucht. Dies gilt auch für die Vorsatzgeräte 1a und 1b, bei denen die Anordnung diesbezüglich schematischer gezeichnet ist.

Das Befestigen des Werkstück-Bearbeitungswerkzeugs an der jeweiligen Halteeinrichtung kann auch durch andere Befestigungsmittel als Schrauben erfolgen.

Beim normalen Arbeiten mit der Stichsäge 2 ohne Vorsatzgerät durchgreift das Sägeblatt 7, wie erwähnt, den Sägetisch 6, der senkrecht zur Zeichenebene der Figur 1 rundum nach allen Seiten, d.h. seitlich, vorne und hinten, über das Sägeblatt 7 vorsteht. Dieses Vorstehen des Sägetisches 6 verhindert das randseitige Sägen eines Werkstücks, insbesondere wenn am Rand der zu sägenden Fläche ein hochstehender Absatz vorhanden ist. Verwendet man dagegen das aus den Figuren 1 bis 6 hervorgehende Vorsatzgerät 1, kann man auch seitlich ganz außen und außerdem in Vorschubrichtung 8 ganz vorne unbehindert sägen.

Um mit Bezug auf die Vorschubrichtung 8 beidseitig gleiche Sägemöglichkeiten zu schaffen, weist das Vorsatzgerät, wie schon erwähnt, die beiden einander entgegengesetzten seitlichen Befestigungsstellen, z.B. bei dem Vorschubgerät 1 die beiden Befestigungsstellen 21, 21', für das von einem Sägeblatt gebildete Bearbeitungswerkzeug 17 auf. Die beiden Befestigungsstellen sind dabei außerdem ganz vorne am Vorsatzgerät angeordnet.

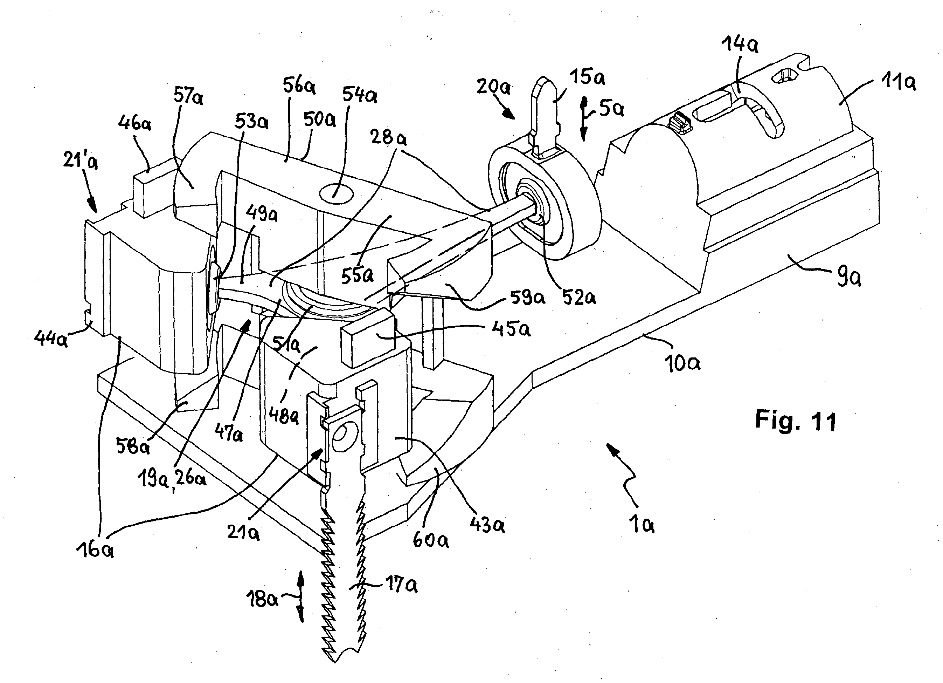

Für das aus Figur 11 hervorgehende Vorsatzgerät 1a gilt das Gleiche. Auch hier sind die beiden Befestigungsstellen 21a, 21a' entsprechend weit voneinander entfernt, so dass die Befestigungsstellen seitlich außen und vorne am Vorsatzgerät angeordnet sind.

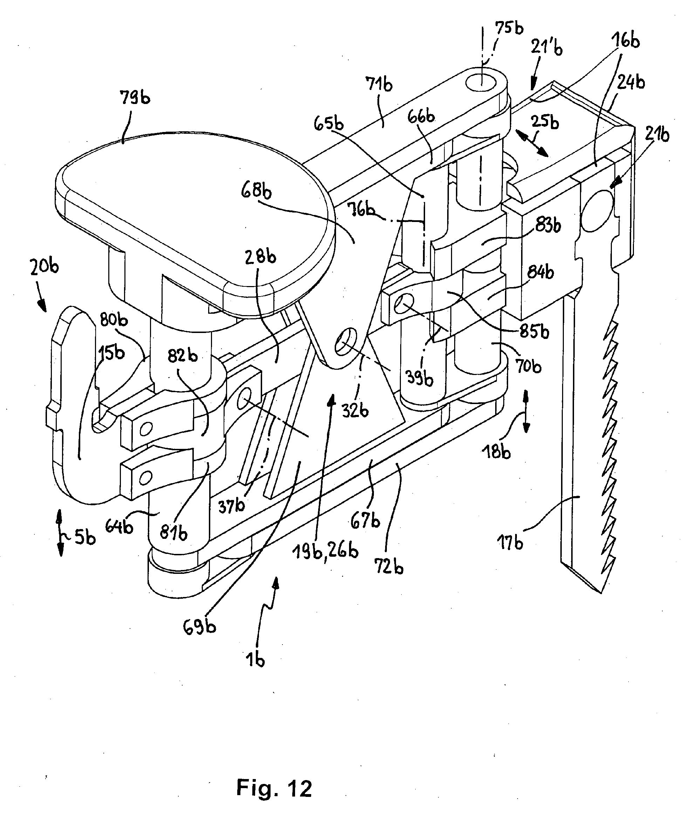

Im Falle der Figuren 12 bis 17 wird die Halteeinrichtung 16b von einem verhältnismäßig schmal gezeichneten Halteblock 24b gebildet, an dem die beiden seitlichen Befestigungsstellen 21b, 21b' angeordnet sind. Der Halteblock 24b könnte prinzipiell breiter als dargestellt ausgebildet werden, so dass die beiden Befestigungsstellen 21b, 21b' wiederum seitlich ganz außen liegen würden. Bei dem Vorsatzgerät 1b ist jedoch zusätzlich eine Seitenverstelleinrichtung für die von dem Halteblock 24b gebildete Halteeinrichtung 16b vorgesehen, so dass sich der Halteblock 24b und somit die beiden Befestigungsstellen 21b, 21b' quer zur Vorschubrichtung in Querrichtung 25b nach beiden Seiten hin verlagern lässt, wie noch beschrieben werden wird.

Zweckmäßigerweise ist also, wie geschildert, vorgesehen, dass die beiden Befestigungsstellen 21, 21'; 21a, 21a' bei an der Hubsäge 2 befestigten Vorsatzgerät 1; 1a in Vorschubrichtung 8 von der Hubsäge 2 aus gesehen im Bereich der der Hubsäge abgewandten Vorderseite des Vorsatzgerätes 1; 1a beiderseits der Vorschubrichtung 8 seitlich außen am Vorsatzgerät 1; 1a angeordnet sind bzw. dass die Halteeinrichtung 16b mittels einer Seitenverstelleinrichtung in Querrichtung 25b so verstellbar angeordnet ist, dass die beiden Befestigungsstellen 21b, 21b' nach seitlich außen am Vorsatzgerät verlagert werden können.

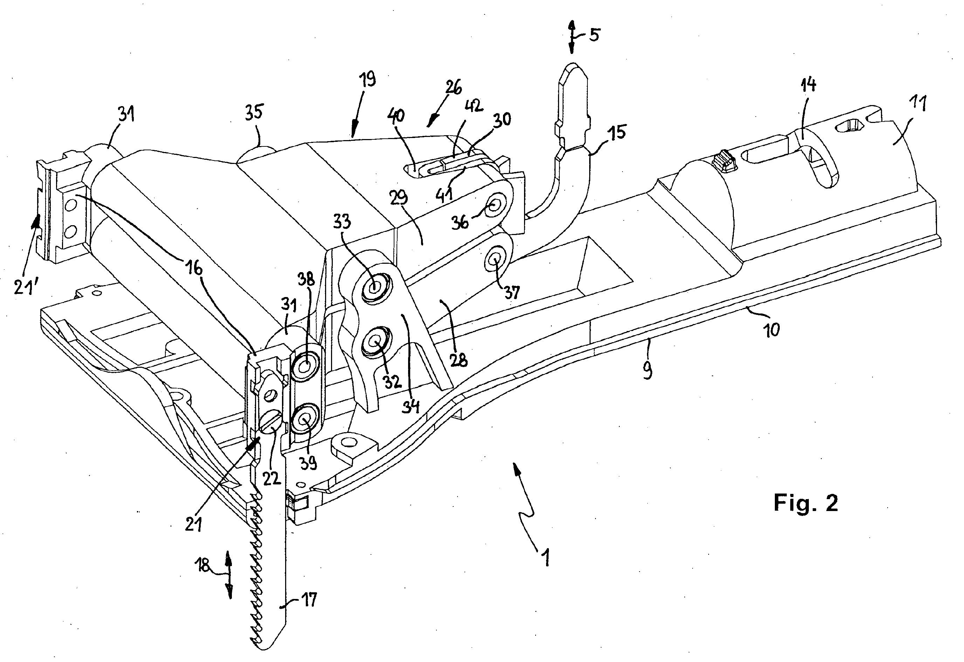

Insbesondere aus den Figuren 2, 4 und 11 ist ersichtlich, dass das Vorsatzgerät 1 an der Stelle der beiden Befestigungsstellen 21, 21'; 21a, 21'a; seine größte Breite aufweist, wobei das Vorsatzgerät an dieser Stelle mindestens gleich breit oder breiter als die Stichsäge 2 ist. Auf diese Weise ist sichergestellt, dass die Anwendung des Bearbeitungswerkzeugs 17 weder durch das Vorsatzgerät noch durch die Stichsäge behindert wird.

Ferner ist es in jedem Falle vorteilhaft, dass sich das Vorsatzgerät 1; 1a; 1b; 1c im an der Hubsäge 2 befestigten Zustand in Vorschubrichtung 8 vor die Hubsäge 2 erstreckt.

Die Bewegungs-Umsetzeinrichtung 19; 19a; 19b; 19c kann verschieden ausgebildet und an den jeweiligen Anwendungszweck ausgebildet sein. Im Falle einer eine zur Hubbewegung 5 des Antriebsteils 15, 15'; 15a; 15b parallel versetzte Arbeitsbewegung 18; 18a; 18b ausführenden Halteeinrichtung 16; 16a; 16b weist die Bewegungs-Umsetzeinrichtung 19; 19a; 19b zweckmäßigerweise eine schwenkgelagerte Wippenanordnung 26; 26a; 26b auf, die einerseits der Schwenklagerung mit der Halteeinrichtung 16; 16a; 16b und andererseits der Schwenklagerung mit dem Antriebsteil 15, 15'; 15a; 15b verbunden oder verbindbar ist.

In der Zeichnung wurde lediglich in Figur 1 das die Bewegungs-Umsetzeinrichtung 19 abdeckende Gehäuse 27 des Vorsatzgerätes 1 eingezeichnet. Ansonsten fehlt dieses Gehäuse, so dass in der Zeichnung die jeweilige Bewegungs-Umsetzeinrichtung sichtbar ist.

Die Ausbildung der Bewegungs-Umsetzeinrichtung 19; 19a; 19b als Wippenanordnung 26; 26a; 26b lässt sich konstruktiv einfach verwirklichen. Ferner bewirkt sie, dass die Halteeinrichtung 16; 16a; 16b entgegengesetzt zur Hubstange 4 der Stichsäge 2 und dem Antriebsteil 15, 15'; 15a; 15b auf und ab oszilliert. Die Arbeitsbewegung der Halteeinrichtung erfolgt daher stets entgegengesetzt zur Hubbewegung der Hubstange und des Antriebsteils, so dass man einen gewissen Ausgleich der auftretenden Kräfte erhält, was sich günstig auf das Halten der mit dem Vorsatzgerät versehenen Stichsäge durch den Benutzer auswirkt.

Die bei dem Vorsatzgerät 1 der Figuren 1 bis 6 vorhandene Wippenanordnung 26 weist zwei zueinander parallele und jeweils für sich schwenkgelagerte Wippenhebel 28, 29 auf, deren dem Antriebsteil 15 zugewandten Enden über mindestens ein hinteres Verbindungselement 30, 30' und deren der Halteeinrichtung 16 zugewandten Enden über mindestens ein vorderes Verbindungselement 31 gelenkig miteinander verbunden sind, so dass ein beim Betrieb die Halteeinrichtung 16 mit gleichbleibender Ausrichtung bewegende Parallelogrammanordnung gebildet wird.

Die beiden übereinander angeordneten Wippenhebel 28, 29 sind verhältnismäßig breit ausgebildet, so dass sie ein plattenartiges Aussehen haben. Dabei sind sie vorne so breit, dass sie im Wesentlichen bis zu den Befestigungsstellen 21, 21' reichen.

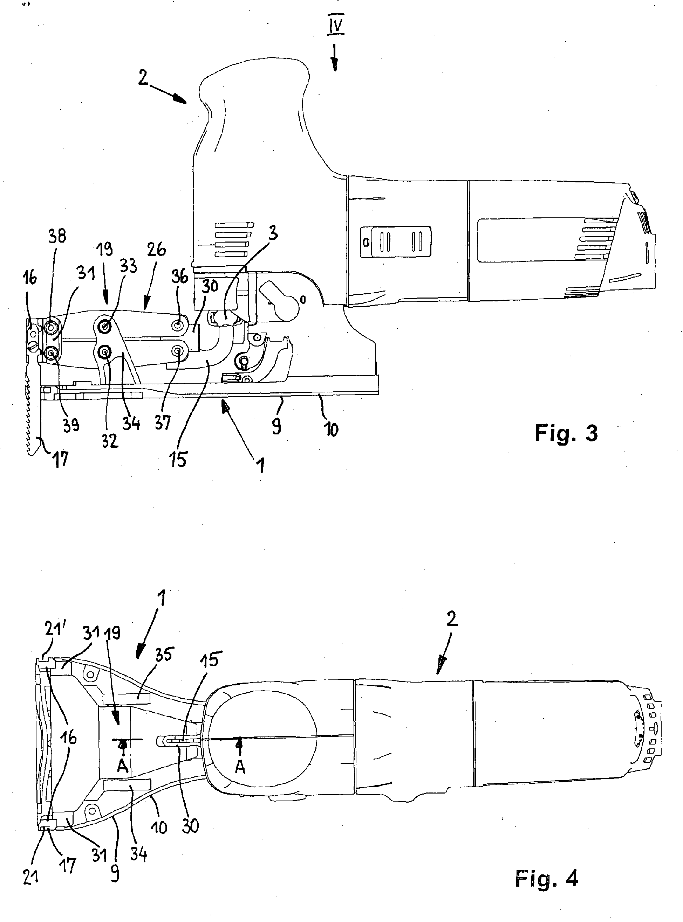

Das der Halteeinrichtung 16 zugewandte vordere Verbindungselement 31 ist, wie aus den Figuren 2 und 4 ersichtlich ist, in zwei beiderseits der Wippenhebel 28, 29 angeordnete Teil-Verbindungselemente unterteilt, die beide mit der Bezugsziffer 31 bezeichnet worden sind.

Insbesondere aus Figur 2 geht ferner hervor, dass die Halteeinrichtung 16 ebenfalls zweiteilig ist, so dass die beiden Befestigungsstellen 21, 21' jeweils an einem gesonderten Halteteil angeordnet sind.

In diesem Zusammenhang ist die Anordnung zweckmäßigerweise so getroffen, dass das der Halteeinrichtung 16 zugewandte Verbindungselement 31 fest mit der Halteeinrichtung 16 verbunden ist. Auf diese Weise ist an jeder Seite der Wippenhebel 28, 29 das betreffende Teil des Verbindungselements 31 mit dem zugewandten Teil der Halteeinrichtung 16 fest verbunden.

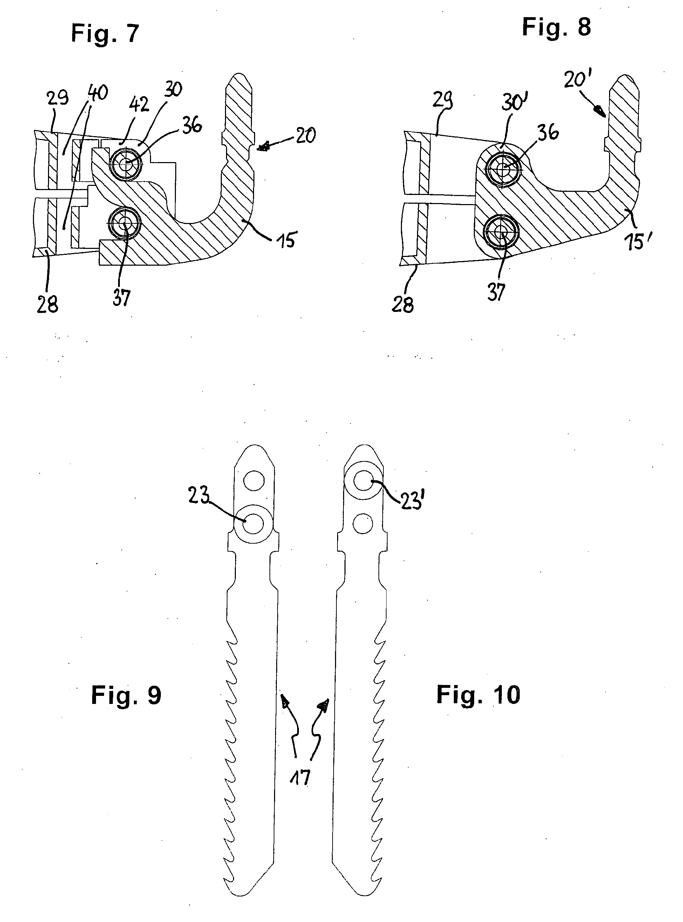

Das hintere Verbindungselement 30, 30' kann entweder ein Bestandteil des Antriebsteils oder ein vom Antriebsteil gesondertes Teil sein. Ersteres gilt für das aus Figur 8 hervorgehende Antriebsteil 15'. Im Falle der Figur 7 und bei dem Ausführungsbeispiel nach den Figuren 1 bis 6 sind das hintere Verbindungselement 30 und das Antriebsteil 15 dagegen getrennte Teile.

Die beiden Wippenhebel 28, 29 sind jeweils in ihrem mittleren Bereich mittels einer Gelenkachse 32, 33 schwenkgelagert. Die beiden Gelenkachsen 32, 33 sind beiderseits der Wippenhebel 28, 29 an einem hochstehend am Vorsatzgerät 1 angeordneten, zweckmäßigerweise von der Tischplatte 10 hochstehenden, Lagerbock 34, 35 gelagert. Ferner erfolgt die schwenkbare Verbindung der beiden Wippenhebel 28, 29 mit dem Antriebsteil 15, 15' bzw. dem hinteren Verbindungselement 30, 30' und der Halteeinrichtung 16 bzw. dem vorderen Verbindungselement ebenfalls mittels Gelenkachsen 36, 37, 38, 39.

Im Falle der Figur 7 ist das hintere Verbindungselement 30, wie schon erwähnt, ein vom Antriebsteil 15 gesondertes Teil und wird über die Gelenkachsen 36, 37 mit den beiden Wippenhebeln 28, 29 verbunden. Dabei ist die Anordnung zweckmäßigerweise so getroffen, dass die beiden Wippenhebel 28, 29 in ihrem hinteren Bereich in der Mitte geschlitzt sind. In diesem geschlitzten Bereich ist das zweckmäßigerweise U-förmige hintere Verbindungselement 30 angeordnet. Die beiden Gelenkachsen 36, 37 erstrecken sich quer durch den Zwischenraum zwischen den beiden mit Abstand zueinander angeordneten Schenkeln 41, 42 des U-förmigen hinteren Verbindungselements 30, so dass das hintere Verbindungselement 30 über die Gelenkachsen 36, 37 mit den Wippenhebeln 28, 29 verbunden ist. Das Antriebsteil 15 ist nun an seinem den Wippenhebeln 28, 29 zugewandten Endbereich so ausgebildet, dass das Antriebsteil 15 zwischen die beiden Schenkel 41, 42 des hinteren Verbindungselements 30 einsteckbar und dabei an den beiden Gelenkachsen 36, 37 verhakend lösbar einhängbar ist, wie im Einzelnen in Figur 7 gezeigt ist. Das Vorsatzgerät 1 wird daher zu seiner Befestigung an der Stichsäge 2 am bereits am Sägeblatthalter 3 festgelegten Antriebsteil 15 eingehängt.

Im Falle der Figur 8 sind die beiden Wippenhebel 28, 29 in gleicher Weise hinten geschlitzt. Im Unterschied zur Figur 7 fehlt das in Figur 7 vom Antriebsteil 15 gesonderte, eingesteckte hintere Verbindungselement 30. Der das hintere Verbindungselement 30' bildende einstückige Fortsatz des Antriebsteils 15' sitzt auf den den geschlitzten Bereich der Wippenhebel 28, 29 durchgreifenden Gelenkachsen 36, 37, so dass das Antriebsteil 15' fest mit den Wippenhebeln 28, 29 verbunden ist.

Bei den Ausführungsbeispielen nach den Figuren 11 und 12 bis 17 wird die Wippenanordnung von einem schwenkgelagerten Wippenhebel 28a, 28b gebildet, der beidenends jeweils gelenkig mit dem Antriebsteil 15a, 15b bzw. mit der Halteeinrichtung 16a, 16b verbunden ist. Ferner ist in beiden Fällen eine Parallelführungseinrichtung vorhanden, so dass die Arbeitsbewegung 18a, 18b der Halteeinrichtung 16a, 16b parallel zur Hubbewegung 5a, 5b des Antriebsteils 15a, 15b verläuft. Im Falle des Ausführungsbeispiels nach den Figuren 1 bis 6 entfällt wegen der Parallelbewegungseigenschaft der von den beiden Wippenhebeln 28, 29, dem hinteren Verbindungselement 30, 30' und dem vorderen Verbindungselement 31 gebildeten Parallelogrammanordnung eine gesonderte Parallelführungseinrichtung.

Bei dem Ausführungsbeispiel nach Figur 11 erfolgt die Schwenklagerung des Wippenhebels 28a und die gelenkigen Verbindungen des Wippenhebels 28a mit dem Antriebsteil 15a und der Halteeinrichtung 16a nicht mittels Gelenkachsen sondern mittels Kugelgelenken.

Ferner wird die Halteeinrichtung 16a von zwei voneinander getrennten, in Querrichtung mit Abstand zueinander angeordneten Einzelhalteeinrichtungen 43a, 44a gebildet, die jeweils eine der beiden Befestigungsstellen 21a, 21'a für das Bearbeitungswerkzeug 17a aufweisen und in Richtung der Arbeitsbewegung 18a geführt angeordnet sind. Diese Parallelführungseinrichtung weist zwei jeweils einer der Einzelhalteinrichtungen 43a, 44a zugeordnete Führungsleisten 45a, 45b oder sonstige Linearführungen auf, die innerhalb des Vorsatzgerätes 1a feststehend angeordnet sind.

Des Weiteren bildet die von der mittleren Schwenklagerung des Wippenhebels 28a aus gesehen der Halteeinrichtung 16a zugewandte Hebelpartie 47a des Wippenhebels 28a zwei jeweils zu einer der beiden Einzelhalteeinrichtungen 43a, 44a verlaufende Hebelbereiche 48a, 49a, von denen der Hebelbereich 48a in Figur 11 durch die Einzelhalteeinrichtung 43a verdeckt ist. Der Wippenhebel 28a verzweigt sich also zu den beiden Einzelhalteeinrichtungen 43a, 44a hin.

Ferner ist bei dem Ausführungsbeispiel nach Figur 11 eine vom Benutzer betätigbare Feststelleinrichtung 50a vorhanden, mit der wahlweise die eine oder andere der Einzelhalteeinrichtungen 43a, 44a in Richtung der Arbeitsbewegung 18a festgestellt werden kann.

Das den mittleren Bereich des Wippenhebels 28a schwenklagernde Kugelgelenk 51a ist innerhalb des Vorsatzgerätes 1a ortsfest angeordnet. Ferner sind aus Figur 11 noch das das Antriebsteil 15a mit dem Wippenhebel 28a verbindende Kugelgelenk 52a und das den Hebelbereich 49a mit der Einzelhalteeinrichtung 44a verbindende Kugelgelenk 53a sichtbar. Das den anderen Hebelbereich 48a mit der anderen Einzelhalteeinrichtung 43a verbindende Kugelgelenk ist durch die Einzelhalteeinrichtung 43a verdeckt. Es entspricht dem Kugelgelenk 53a.

Bei unbetätigter Feststelleinrichtung 50a führen beide Einzelhalteeinrichtungen 43a, 44a gemeinsam die Arbeitsbewegung 18a aus. Hält man dagegen in Figur 11 die Einzelhalteeinrichtung 44a, an der kein Sägeblatt 17a befestigt ist, mittels der Feststelleinrichtung 50a fest, bleibt die Einzelhalteeinrichtung 44a unbewegt stehen und nur die das Sägeblatt 17a tragende Einzelhalteeinrichtung 43a führt die Arbeitsbewegung gemäß Doppelpfeil 18a aus. Dies erfolgt unter gleichzeitigem seitlichem Verkippen des Wippenhebels 28a. Dies wird durch die Kugelgelenke ermöglicht.

Auf diese Weise werden die beim Betrieb bewegten Massen klein gehalten.

Der Wippenhebel 28a weist zweckmäßigerweise eine plattenartige Flachgestalt auf.

Die Feststelleinrichtung 50a kann um eine zwischen den beiden Einzelhalteeinrichtungen 43a, 44a parallel zur Arbeitsbewegung 18a verlaufende Schwenkachse 54a schwenkbar sein und zwei beiderseits der Schwenkachse 54a angeordnete, jeweils einer der Einzelhalteeinrichtungen 43a, 44a zugeordnete Feststellpartien 55a, 56a aufweisen, die jeweils gabelartig ausgebildet sind und zwei in Richtung der Schwenkachse 54a mit der Höhenabmessung der Einzelhalteeinrichtungen 43a, 44a entsprechendem Abstand zueinander angeordnete Feststellschenkel 57a, 58a bzw. 59a, 60a bilden. Schwenkt man die Feststelleinrichtung 50a, wie in Figur 11 dargestellt, zur Einzelhalteeinrichtung 44a hin, übergreift das Feststellschenkelpaar 57a, 58a der Feststellpartie 56a die Einzelhalteeinrichtung 44a in Richtung der Arbeitsbewegung 18a beidseitig, so dass die Einzelhalteeinrichtung 44a an einer Bewegung gehindert wird. Schwenkt man die Feststelleinrichtung 50a zur anderen Einzelhalteeinrichtung 43a hin, wird diese festgestellt.

Im Falle des Ausführungsbeispiels nach den Figuren 12 bis 17 wird die Wippenanordnung ebenfalls von einem schwenkgelagerten Wippenhebel 28b gebildet. Dabei erfolgt die Schwenklagerung des Wippenhebels 28b und die gelenkigen Verbindungen des Wippenhebels 28b mit dem Antriebsteil 15b und der Halteeinrichtung 16b mittels Gelenkachsen 32b, 37b und 39b, die selbst nicht eingezeichnet, jedoch durch ihre Achslinien und die zugehörigen Lagerbohrungen angegeben sind.

Das Antriebsteil 15b ist mit einer parallel zur Hubbewegungsrichtung 5b verlaufenden antriebsseitigen Führungssäule 64b geführt verbunden. Hierzu ist das Antriebsteil 15b mit mindestens einer, zweckmäßigerweise wie dargestellt mit zwei mit axialem Abstand zueinander angeordneten, auf der antriebsseitigen Führungssäule 64b geführten, zweckmäßigerweise ösenartigen, Lagerfortsätzen 80b, 81b fest verbunden, zwischen denen ein Mitnahmeelement 82b angeordnet ist, das ebenfalls verschiebbar auf der antriebsseitigen Führungssäule 64b gelagert ist und bei der auf und ab gehenden Hubbewegung 5b des Antriebsteils 15b von den Lagerfortsätzen 80b, 81b der antriebsseitigen Führungssäule 64b entlang mitgenommen wird. Der Wippenhebel 28b ist über die Gelenkachse 37b mit dem Mitnahmeelement 82b gelenkig verbunden, so dass der Wippenhebel 28b im Takt der Hubbewegung 5b um die ihn schwenklagernde Gelenkachse 32b verschwenkt wird. Die von der Gelenkachse 37b durchgriffene Lagerbohrung des Wippenhebels 28b ist als Langloch ausgebildet, damit sich der Wippenhebel 28b verschwenken kann.

Ferner ist die Halteeinrichtung 16b bzw. der die Halteeinrichtung 16b bildende Halteblock 24b mit einer zur antriebsseitigen Führungssäule 64b parallelen und mit Abstand zu dieser angeordneten abtriebsseitigen Führungssäule 65b geführt verbunden. Dabei ist die Anordnung so getroffen, dass der Halteblock 24b mit mindestens einem, zweckmäßigerweise wie dargestellt mit zwei mit axialem Abstand zueinander angeordneten Lagerelementen 83b, 84b fest verbunden ist, die auf der abtriebsseitigen Führungssäule 65b geführt sind. Die beiden Lagerelemente 83b, 84b umschließen die abtriebsseitige Führungssäule 65b im dargestellten Falle nicht vollständig. Zwischen den beiden Lagerelementen 83b, 84b sitzt ein abtriebsseitiges Mitnahmeelement 85b auf der abtriebsseitigen Führungssäule 65b, das über die Gelenkachse 39b gelenkig mit dem Wippenhebel 28 verbunden ist. Die von der Gelenkachse 39b durchgriffene Lagerbohrung des Wippenhebels ist ebenfalls ein Langloch. Beim Betrieb, wenn der Wippenhebel 28b um die Gelenkachse 32b hin und her schwenkt und dabei das abtriebsseitige Mitnahmeelement 85b zu einer der Arbeitsbewegung 18b entsprechenden Auf- und Abbewegung antreibt, nimmt das abtriebsseitige Mitnahmeelement 85b über die Lagerelemente 83b und 84b den Halteblock 24b und somit das Sägeblatt 17b mit.

Die beiden Führungssäulen 64b, 65b sind über ein oberes Verbindungsteil 66b und ein unteres Verbindungsteil 67b miteinander verbunden. Der Wippenhebel 28b ist in Höhenrichtung zwischen den beiden Verbindungsteilen 66b und 67b angeordnet. Vom oberen Verbindungsteil 66b und dem unteren Verbindungsteil 67b steht jeweils eine Lagerpartie 68b bzw. 69b in den Zwischenraum zwischen den beiden Führungssäulen 64b, 65b vor, die sich überlappen und an ihren Überlappungsbereichen Lagerbohrungen für den Durchgriff der den Wippenhebel 28b lagernden Gelenkachse 32b aufweisen. Prinzipiell könnte auch nur eine der beiden Lagerpartien 68b, 69b vorhanden sein und die Gelenkachse 32b halten.

Das Ausführungsbeispiel nach den Figuren 12 bis 17 ist ferner so ausgestaltet, dass die bereits erwähnte Seitenverstelleinrichtung gebildet wird, so dass sich der Haltblock 24b und somit die beiden Befestigungsstellen 21b, 21'b in Querrichtung 25b nach beiden Seiten hin verlagern lässt.

Hierzu sind die beiden Verbindungsteile 66b, 67b verschwenkbar mit den beiden Führungssäulen 64b, 65b verbunden. Ferner ist zwischen der abtriebsseitigen Führungssäule 65b und dem Halteblock 24b eine weitere Führungssäule 70b angeordnet, an der der Halteblock 24b geführt ist. Der Halteblock 24b ist somit sowohl an der abtriebsseitigen Führungssäule 65b als auch an der weiteren Führungssäule 70b geführt, die von der antriebsseitigen Führungssäule 64b aus gesehen hintereinander angeordnet sind.

Dem oberen Verbindungsteil 66b und dem unteren Verbindungsteil 67b ist jeweils ein parallel zu diesen verlaufender und gleiche Länge wie diese aufweisender oberer Lenkhebel 71b bzw. unterer Lenkhebel 72b benachbart. Der obere Lenkhebel 71b verläuft oberhalb des oberen Verbindungsteils 66b und der untere Lenkhebel 72b unterhalb des unteren Verbindungsteils 67b. Dabei sind die beiden Lenkhebel 71b, 72b einerseits um eine Achslinie 78b, die im dem Abstand zwischen der Achslinie 75b der weiteren Führungssäule 70b und der Achslinie 76b der abtriebsseitigen Führungssäule 65b entsprechendem Abstand parallel zur Achslinie 77b der antriebsseitigen Führungssäule 64b verläuft, und andererseits um die Achslinie 75b der weiteren Führungssäule 70b schwenkbar gelagert.

Den der Tischplatte 10b zugewandten hinteren Endbereichen des oberen Verbindungsteils 66b und des oberen Lenkhebels 71b ist ein oberes hinteres Kopplungselement 89b zugeordnet, an dem das obere Verbindungsteil 66b und der obere Lenkhebel 71b schwenkbar gelagert sind. Das Kopplungselement 89b weist zwei Schwenkzapfen 90b, 91b auf, von denen der eine Schwenkzapfen 90b das obere Verbindungsteil 66b durchgreift und in die antriebsseitige Führungssäule 64b eingreift und der andere Schwenkzapfen 91b den oberen Lenkhebel 71b lagert.

Den hinteren Endbereichen des unteren Verbindungsteils 67b und des unteren Lenkhebels 72b ist ein entsprechendes unteres hinteres Kopplungselement 92b mit zwei Schwenkzapfen 93b, 94b zugeordnet, von denen der eine Schwenkzapfen das untere Verbindungsteil 67b durchgreift und in die antriebsseitige Führungssäule 64b eingreift, während der andere Schwenkzapfen 94b zur Lagerung des unteren Lenkhebels 72b dient. Das Kopplungselement 92b muss kein gesondertes Teil sondern kann an die Tischplatte 10b angeformt sein.

Bei den vorderen Endbereichen der Verbindungsteile 66b, 67b und Lenkhebel 71b, 72b liegen ähnliche Verhältnisse vor. Hier ist dem oberen Verbindungsteil 66b und dem oberen Lenkhebel 71b ein oberes vorderes Kopplungselement 95b und dem unteren Verbindungsteil 67b und dem unteren Lenkhebel 72b ein unteres vorderes Kopplungselement 96b zugeordnet. Die beiden vorderen Kopplungselemente 95b, 96b sind stirnseitig an die abtriebsseitige Führungssäule 65b und die weitere Führungssäule 70b angesetzt und weisen jeweils zwei Schwenkzapfen 97b, 98b bzw. 99b, 100b auf, an denen die Verbindungsteile 66b, 67b und Lenkhebel 71b, 72b schwenkbar gelagert sind.

Sowohl oben als auch unten bilden das Verbindungsteil 66b bzw. 67b und der jeweils zugewandte Lenkhebel 71b bzw. 72b zusammen mit den zugehörigen Schwenkzapfen ein Gelenkparallelogramm, so dass sich zusammen mit der Maßnahme, dass der Halteblock 24b sowohl an der abtriebsseitigen Führungssäule 65b als auch an der weiteren Führungssäule 70b geführt ist, ergibt, dass sich der Halteblock 24b beispielsweise beim Verschwenken des oberen Verbindungsteils 66b je nach der Schwenkrichtung zur einen oder anderen Seite hin bewegt, wobei der Halteblock 24b und somit das Sägeblatt 17b seine Ausrichtung beibehält, wie insbesondere aus Figur 17 hervorgeht.

Beim dargestellten Ausführungsbeispiel ist eine Verstelleinrichtung 79b beispielsweise in Gestalt eines Drehknopfes zum Verschwenken des oberen Verbindungsteils 66b vorhanden. Die Verstelleinrichtung 79b wird von oben her hinten am oberen Lenkhebel 71b vorbei mit dem oberen Verbindungsteil 66 in Steckeingriff gebracht. Hierzu kann die Verstelleinrichtung 79b unterhalb ihrer vom Benutzer zu ergreifenden Handhabe 101b eine zweischenkelige Gabelanordnung 102b aufweisen, die das obere Verbindungsteil 66b beidseitig übergreift, so dass das obere Verbindungsteil 66b beim Verdrehen der Handhabe 101b mitgenommen wird.

In der Mittelstellung des Haltblocks 24b (Figuren 12 bis 14) sind die Verbindungsteile 66b, 67b und Lenkhebel 71b, 72b in Draufsicht fluchtend übereinander angeordnet. Beim Verdrehen der Handhabe 101b verlaufen die Verbindungsteile 66b, 67b und die Lenkhebel 71b, 72b dagegen seitlich nebeneinander (Figur 17).

Nun noch zum Ausführungsbeispiel nach Figur 18:
Hier ist die Arbeitsbewegung 18c nicht parallel sondern rechtwinkelig zur Hubbewegung 5c des Sägeblatthalters 3 gerichtet. Bei diesem Vorsatzgerät 1c ist die Halteeinrichtung 16c am Vorsatzgerät 1c in Richtung der Arbeitsbewegung 18c geführt angeordnet. Dabei kann die Halteeinrichtung 16c am Ende eines Führungsstabes 61c oder dergleichen angeordnet sein, der durch einen feststehend am Vorsatzgerät 1c angeordneten Lagerbock 62c oder dergleichen geführt ist. Das Antriebsteil 15c und die Halteeinrichtung 16c sind über einen schräg zur Hubbewegung 5 und der Arbeitsbewegung 18c verlaufenden, die Bewegungs-Umsetzeinrichtung 19c bildenden Bewegungs-Umsetzhebel 63c gelenkig miteinander verbunden. Fährt die Hubstange der Stichsäge 2 und somit das Antriebsteil 15c nach unten, wird das mit der Halteeinrichtung 16c verbundene Sägeblatt 17c mittels des Bewegungs-Umsetzhebels 63c nach vorne geschoben. Bewegt sich die Hubstange der Stichsäge 2 nach oben, wird das Sägeblatt 17c wieder nach hinten gezogen.

## Patentansprüche

1. Vorsatzgerät für eine Hubsäge, insbesondere Stichsäge, die einen beim Betrieb eine hin und her gehende Hubbewegung ausführenden Sägeblatthalter (3) zum lösbaren Befestigen eines Sägeblattes (7) aufweist, wobei das Vorsatzgerät an der Hubsäge (2) befestigbar ist und ein mit dem Sägeblatthalter (3) an Stelle eines Sägeblattes (7) verbindbares Antriebsteil (15, 15'; 15a; 15b; 15c), eine beim Betrieb eine hin und her gehende, mit Bezug auf die Hubbewegung des Sägeblatthalters (3) parallel versetzte und/oder winkelig zur Hubbewegung gerichtete Arbeitsbewegung ausführende Halteeinrichtung (16; 16a; 16b; 16c) für ein Werkstück-Bearbeitungswerkzeug (17; 17a; 17b; 17c) und eine die Hubbewegung des Antriebsteils (15, 15'; 15a; 15b; 15c) in die Arbeitsbewegung der Halteeinrichtung (16; 16a; 16b; 16c) umsetzende Bewegungs-Umsetzeinrichtung (19; 19a; 19b; 19c) enthält.

2. Vorsatzgerät nach Anspruch 1, **dadurch gekennzeichnet, dass** bei einer Hubsäge mit einem lösbar befestigten, auf das zu sägende Werkstück aufzulegenden Sägetisch (6) das Vorsatzgerät ein anstelle des Sägetisches (6) an der Hubsäge (2) zu befestigendes, die Bewegungs-Umsetzeinrichtung (19; 19a; 19b; 19c) tragendes Tragteil (9) enthält.

3. Vorsatzgerät nach Anspruch 2, **dadurch gekennzeichnet, dass** das Tragteil (9) eine an einem Werkstück auflegbare Tischplatte (10) bildet.

4. Vorsatzgerät nach einem der Ansprüche 1 bis 3, **dadurch gekennzeichnet, dass** bei einer mit Bezug auf die Hubbewegung parallel versetzten Arbeitsbewegung die Bewegungs-Umsetzeinrichtung (19; 19a; 19b) eine schwenkgelagerte Wippenanordnung (26; 26a; 26b) aufweist, die einerseits der Schwenklagerung mit der Halteeinrichtung (16; 16a; 16b) und andererseits der Schwenklagerung mit dem Antriebsteil (15, 15'; 15a; 15b) verbunden oder verbindbar ist.

5. Vorsatzgerät nach Anspruch 4, **dadurch gekennzeichnet, dass** die Wippenanordnung (26) zwei zueinander parallele und jeweils für sich schwenkgelagerte Wippenhebel (28, 29) aufweist, die beidenends jeweils gelenkig mit mindestens einem die beiden Wippenhebel (28, 29) verbindenden Verbindungselement (30, 31) verbunden sind, so dass eine beim Betrieb die Halteeinrichtung (16) mit gleichbleibender Ausrichtung bewegende Parallelogrammanordnung gebildet wird.

6. Vorsatzgerät nach Anspruch 5, **dadurch gekennzeichnet, dass** das der Halteeinrichtung (16) zugewandte Verbindungselement (31) fest mit der Halteeinrichtung (16) verbunden ist.

7. Vorsatzgerät nach Anspruch 5 oder 6, **dadurch gekennzeichnet, dass** das dem Antriebsteil (15') zugewandte Verbindungselement (30') Bestandteil des Antriebsteils (15') ist oder dass das dem Antriebsteil (15) zugewandte Verbindungselement (30) ein vom Antriebsteil (15) gesondertes Teil ist und das Antriebsteil (15) an den beiden die beiden Wippenhebel (28, 29) mit dem Verbindungselement (30) verbindenden Gelenkachsen (36, 37) verhakend lösbar einhängbar ist.

8. Vorsatzgerät nach Anspruch 4, **dadurch gekennzeichnet, dass** die Wippenanordnung (26a; 26b) einen schwenkgelagerten Wippenhebel (28a; 28b) aufweist, der beidenends jeweils gelenkig mit dem Antriebsteil (15a; 15b) bzw. mit der Halteeinrichtung (16a; 16b) verbunden ist, wobei eine Parallelführungseinrichtung vorhanden ist, so dass die Arbeitsbewegung der Halteeinrichtung (16a; 16b) parallel zur Hubbewegung des Antriebsteils (15a; 15b) verläuft.

9. Vorsatzgerät nach Anspruch 8, **dadurch gekennzeichnet, dass** die Schwenklagerung des Wippenhebels (28a) und die gelenkigen Verbindungen des Wippenhebels (28a) mit dem Antriebsteil (15a) und der Halteeinrichtung (16a) mittels Kugelgelenken erfolgen und dass die Halteeinrichtung (16a) von zwei voneinander getrennten, jeweils eine der beiden Befestigungsstellen (21a, 21'a) aufweisenden und in Richtung der Arbeitsbewegung geführt angeordneten Einzelhalteeinrichtungen (43a, 44a) gebildet wird, wobei die von der Schwenklagerung des Wippenhebels (28a) aus gesehen der Halteeinrichtung (16a) zugewandte Hebelpartie (47a) des Wippenhebels (28a) zwei jeweils zu einer der beiden Einzelhalteeinrichtungen (43a, 44a) verlaufende und mit der jeweiligen Einzelhalteeinrichtung mittels eines Kugelgelenks (53a) verbundene Hebelbereiche (48a, 49a) bildet und eine vom Benutzer betätigbare Feststelleinrichtung (50a) zum wahlweisen Feststellen einer der Einzelhalteeinrichtungen (43a, 44a) in Richtung der Arbeitsbewegung vorhanden ist.

10. Vorsatzgerät nach Anspruch 8, **dadurch gekennzeichnet, dass** das Antriebsteil (15b) mit einer parallel zur Hubbewegungsrichtung (5b) verlaufenden antriebsseitigen Führungssäule (64b) und die Halteeinrichtung (16b) mit einer zur antriebsseitigen Führungssäule (64b) parallelen abtriebsseitigen Führungssäule (65b) geführt verbunden ist, wobei die beiden Führungssäulen (64b, 65b) über ein oberes Verbindungsteil (66b) und ein unteres Verbindungsteil (67b) miteinander verbunden sind und von dem oberen Verbindungsteil (66b) und/oder dem unteren Verbindungsteil (67b) eine Lagerpartie (68b, 69b) in den Zwischenraum zwischen den beiden Führungssäulen (64b, 65b) vorsteht, an der der Wippenhebel (28b) schwenkgelagert ist.

11. Vorsatzgerät nach Anspruch 10, **dadurch gekennzeichnet, dass** die beiden Verbindungsteile (66b, 67b) verschwenkbar mit den beiden Führungssäulen (64b, 65b) verbunden sind, dass zwischen der abtriebsseitigen Führungssäule (65b) und einem die Halteeinrichtung (16b) bildenden Halteblock (24b) eine weitere Führungssäule (70b) für den Halteblock angeordnet ist, dass dem oberen Verbindungsteil (66b) und dem unteren Verbindungsteil (67b) jeweils ein parallel zu den Verbindungsteilen verlaufender und gleiche Länge wie diese aufweisender oberer Lenkhebel (71b) bzw. unterer Lenkhebel (72b) zugeordnet ist, dass die beiden Lenkhebel (71b, 72b) einerseits um eine Achslinie (78b), die im dem Abstand zwischen der Achslinie (75b) der weiteren Führungssäule (70b) und der Achslinie (76b) der abtriebsseitigen Führungssäule (65b) entsprechendem Abstand parallel zur Achslinie (77b) der antriebsseitigen Führungssäule (64b) verläuft, und andererseits um die Achslinie (75b) der weiteren Führungssäule (70b) schwenkbar sind und dass eine vom Benutzer betätigbare Verstelleinrichtung (79b) zum Verschwenken mindestens eines der Verbindungsteile (66b, 67b) und/oder der Lenkhebel (71b, 72b) vorhanden ist.

12. Vorsatzgerät nach einem der Ansprüche 1 bis 11, **dadurch gekennzeichnet, dass** die Halteeinrichtung (16; 16a; 16b) zwei an einander entgegengesetzten Seiten des Vorsatzgerätes (1; 1a; 1b) außen angeordnete Befestigungsstellen (21, 21'; 21a, 21'a; 21b, 21'b) für das Bearbeitungswerkzeug (17; 17a, 17b) aufweist.

13. Vorsatzgerät nach Anspruch 12, **dadurch gekennzeichnet, dass** die beiden Befestigungsstellen (21, 21'; 21a, 21'a; 21b, 21'b) bei an der Hubsäge (2) befestigtem Vorsatzgerät (1; 1a; 1b) in Vorschubrichtung von der Hubsäge (2) aus gesehen im Bereich der der Hubsäge (2) abgewandten Vorderseite des Vorsatzgerätes beiderseits der Vorschubrichtung seitlich außen am Vorsatzgerät angeordnet sind, und dass das Vorsatzgerät (1; 1a) vorzugsweise an der Stelle der beiden Befestigungsstellen (21, 21'; 21a, 21'a) seine größte Breite aufweist.

14. Vorsatzgerät nach einem der Ansprüche 1 bis 3, **dadurch gekennzeichnet, dass** bei einer zur Hubbewegung des Sägeblatthalters (3) rechtwinkeligen Arbeitsbewegung die Halteeinrichtung (16c) am Vorsatzgerät (1c) in Richtung der Arbeitsbewegung geführt angeordnet ist und dass das Antriebsteil (15c) und die Halteeinrichtung (16c) über einen schräg zur Hubbewegung und der Arbeitsbewegung verlaufenden, die Bewegungs-Umsetzeinrichtung (19c) bildenden Bewegungs-Umsetzhebel (63c) miteinander verbunden sind.

15. Vorsatzgerät nach einem der Ansprüche 1 bis 14, **dadurch gekennzeichnet, dass** sich das Vorsatzgerät (1; 1a; 1b; 1c) im an der Hubsäge (2) befestigten Zustand in Vorschubrichtung vor die Hubsäge (2) erstreckt.
